# EUROPÄISCHE PATENTANMELDUNG

(11) **EP 3 165 344 A1**
(43) Veröffentlichungstag der Anmeldung: **10.05.2017**
(21) Anmeldenummer: 15003572.3
(22) Anmeldetag: 15.12.2015
(51) Int. Cl.: B29C 44/34, C08J 9/18, B29C 44/42, B29K 105/04

(54) **ERZEUGUNG MIKROZELLULÄR GESCHÄUMTER SPRITZGUSS-BAUTEILE AUS MIT EINEM TREIBMITTEL IMPRÄGNIERTEM KUNSTSTOFF-GRANULAT**

(30) Priorität: 04.11.2015 DE 102015014212
(71) Anmelder: Linde Aktiengesellschaft, 80331 München (DE); ISK, Iserlohner Kunststoff-Technologie GmbH, 58638 Iserlohn (DE)
(72) Erfinder: Heninger, Rolf, 85635 Höhenkirchen-Siegertsbrunn (DE); Praller, Andreas, 82110 Germering (DE); Kürten, Andreas, 58644 Iserlohn (DE); Szych, Pawel, 81241 München (DE); Maschotta, Fabian, 58097 Hagen (DE)
(74) Vertreter: Gellner, Bernd

(57) **Zusammenfassung**

Die Erfindung betrifft ein Verfahren zum Herstellen eines Bauteils, bei dem ein Werkstoff (S) mit einem fluiden Treibmittel (T) bei einem ersten Druck beladen wird und der mit dem Treibmittel (T) beladene Werkstoff (S) in einer Vorrichtung zur Herstellung des Bauteils erwärmt wird und das Bauteil geformt wird, wobei das Treibmittel (T) eine Vielzahl an Gasblasen ausbildet, so dass das ausgehärtete Bauteil eine Zellstruktur aufweist.

## Beschreibung

Die Erfindung betrifft ein Verfahren sowie eine Einrichtung zum Herstellen, insbesondere Spritzgießen, von Bauteilen. Es eignet sich jedoch auch für andere Verfahren wie Spritzprägen, Blasformen oder Pressen sowie für kontinuierliche Prozesse wie Extrusion.

Bekannt ist, dass Kunststoffe, insbesondere Kunststoffgranulat, unter bestimmten Bedingungen Kohlendioxid aufnehmen und speichern können. Parameter sind etwa der Druck und die Dauer der Beaufschlagung mit dem Treibmittel CO₂ sowie die Art des Kunststoffs (siehe z.B. YEONC-TARNC SHIEH et.al: "Interaction of Supercritical Carbon Dioxide with Polymers", Mai 1995).

So können amorphe Kunststoffe tendenziell mehr CO₂ - gemessen in Gewichtsprozent - aufnehmen, als kristalline.

Weiterhin ist es aus dem Stand der Technik bekannt, Kunststoffbauteile mit mikrozellulärer Struktur mittels eines Spritzgussverfahrens herzustellen. So beschreibt z.B. die EP 1 475 208 B1 ein Spritzgussverfahren, bei dem einem in einer Spritzgießvorrichtung befindlichen Kunststoffmaterial, das in der Spritzgussmaschine geschmolzen wird, eine überkritische Flüssigkeit in der Spritzgießvorrichtung zugegeben wird, und das Gemisch in eine Spritzgussform eingespritzt wird. Ein derartiges Herstellen von mikrozellulär geschäumten Kunststoffbauteilen mit physikalischen Treibmitteln (z.B. Stickstoff oder Kohlendioxid) erfordert demnach eine vergleichsweise aufwändige Zusatzausrüstung zu bestehenden Spritzgießanlagen, mit deren Hilfe das verwendete Treibmittel in die Spritzgießmaschine- bzw. in die Kunststoffschmelze eingebracht wird. Dies bedeutet einen erheblichen Eingriff in die Produktionsanlage sowie einen vergleichsweise großen finanziellen Aufwand.

Hiervon ausgehend liegt der vorliegenden Erfindung die Aufgabe zugrunde, ein Verfahren sowie eine entsprechende Einrichtung zum Herstellen, insbesondere zum Spritzgießen, eines Bauteils bereitzustellen, das bzw. die eine vergleichsweise kostengünstige und flexible Herstellung von Spritzgussbauteilen mit Zellstruktur erlaubt.

Diese Aufgabe wird durch ein Verfahren mit den Merkmalen des Anspruchs 1 gelöst. Bevorzugte Ausführungsformen sind in den zugehörigen Unteransprüchen angegeben und werden nachfolgend beschrieben.

Gemäß Anspruch 1 wird bei dem erfindungsgemäßen Verfahren ein schmelz- bzw. plastifizierbarer Werkstoff mit einem fluiden Treibmittel bei einem ersten Druck beladen und der mit dem Treibmittel beladene Werkstoff sodann in eine Vorrichtung zur Herstellung des Bauteils, bevorzugt eine Spritzgießvorrichtung, gegeben, in der der Werkstoff erwärmt und geformt wird wobei sich z. B. durch Druckabbau aus dem Treibmittel eine Vielzahl an Gasblasen ausbildet, so dass das ausgehärtete Bauteil eine Zellstruktur aufweist.

Bevorzugt handelt es sich bei der Zellstruktur um eine mikrozelluläre Struktur, d.h., einzelne Zellen der Struktur weisen vorzugsweise einen Durchmesser im Bereich von 1 bis 900 Mikrometer, vorzugsweise einen Durchmesser im Bereich von 5 bis 40 Mikrometer auf.

Unter einem fluiden Treibmittel wird im Rahmen der vorliegenden Erfindung ein gasförmiges und/oder flüssiges Treibmittel verstanden. Bei dem Treibmittel handelt es sich bevorzugt um z.B. Kohlendioxid (CO₂) Stickstoff (N₂) oder Inertgase wie z.B. Argon. Das Treibmittel kann weitere Stoffe aufweisen.

Weiterhin ist gemäß einer Ausführungsform der Erfindung vorgesehen, dass das Treibmittel beim Beladen des Werkstoffs in einem flüssigen und/oder gasförmigen Zustand ist, oder dass das Treibmittel beim Beladen in einem überkritischen Zustand ist

Das Beladen des Werkstoffs erfolgt gemäß einer Ausführungsform der Erfindung in zumindest einem Behälter, in den der Werkstoff gegeben wird, wobei der Werkstoff in dem Behälter bei dem im Behälter herrschenden ersten Druck mit dem in den Behälter eingeleiteten Treibmittel kontaktiert wird, so dass dieses insbesondere vom Werkstoff zumindest teilweise aufgenommen wird.

Das Beladen des Werkstoffs, der vorzugsweise beim Beladen mit dem Treibmittel bzw. vor dem Schmelzen/Plastifizieren in Granulatform vorliegt (die Korngröße liegt hierbei vorzugsweise im Bereich von 0,2 bis 5 mm), geschieht vorzugsweise bei einem hohem ersten Druck im Bereich von 5 bar bis 60 bar sowie vorzugsweise bei einer Temperatur im Bereich von 0°C bis 30°C sowie vorzugsweise bei einer Treibmittelkonzentration im verwendeten Behälter im Bereich von 50 bis 100 %.

Anstelle einer Granulatform kann der Werkstoff in einer Ausführungsform auch plattenförmig oder bahnenförmig vorliegen (z.B. bei einer Herstellung des Bauteils durch Formpressen). Bei plattenförmigem oder bahnenförmigem Material kann es sich z.B. um Faser-Matrix-Halbzeuge (z.B. Prepregs), insbesondere sogenannte organo sheets, handeln (z.B. glasfaserverstärktes thermoplastisches Halbzeug). Derartige Materialien bzw. Werkstoffe weisen Verstärkungsfasern (z.B. Glasfasern, Kohlefasern etc.) auf, die mit einer Matrix getränkt sind, z.B. mit einer duroplastischen oder thermoplastischen Matrix. Solche Werkstoffe können insbesondere durch Formpressen verarbeitet werden (siehe auch unten).

Der erste Druck kann dabei an den jeweiligen Werkstoff angepasst werden und erlaubt eine vordefinierte Beladung des Werkstoffs mit dem fluiden Treibmittel. Das Treibmittel diffundiert dabei vorzugsweise in den Werkstoff bzw. wird von diesem zumindest teilweise aufgenommen. Man spricht daher auch von einem Imprägnieren des Werkstoffs mit dem Treibmittel.

Bei dem Werkstoff handelt es sich insbesondere um die folgenden Stoffe bzw. Materialien bzw. der verwendete Werkstoff kann die folgenden Stoffe bzw. Materialien aufweisen:
- einen Kunststoff bzw. Polymer,
- einen thermoplastischen Kunststoff, insbesondere Polycarbonat, Polyethylen, Polyamid, ABS, PET oder PP,
- einen duroplastischen Kunststoff,
- Silikone,
- Harze (z.B. Epoxydharze),
sowie ggf. weitere Stoffe oder Materialien. Gemische aus den vorgenannten Stoffen/Materialien sind ebenfalls denkbar.

Weiterhin ist die vom Werkstoff aufgenommene Menge an Treibmittel, die bevorzugt in allen Ausführungsformen bei Raumtemperatur erfolgt, also z. B. bei 20°C bis 30°C, insbesondere abhängig vom ersten Druck sowie von der Behandlungszeit. d.h., der Zeitdauer, während der der Werkstoff mit dem Treibmittel bei dem ersten Druck kontaktiert wird (z.B. in einem Behälter).

Allerdings nimmt die Beladung mit dem Treibmittel in der Regel schnell wieder ab, sobald der auf den Werkstoff/Treibmittel wirkende (erste) Druck auf Normaldruck abgesenkt wird, z.B. wenn der Werkstoff in die Vorrichtung zur Herstellung des Bauteils gegeben wird oder dort verarbeitet wird, z.B. wenn der beladene Werkstoff in einen drucklosen Einfülltrichter einer Plastifiziereinheit einer Spritzgussvorrichtung eingespeist wird.

Insbesondere bei einem Batch-Betrieb, der insbesondere nur einen Behälter verwendet, wird gemäß einer Ausführungsform des erfindungsgemäßen Verfahrens nach dem Erreichen einer für die jeweilige Formgebungs-Aufgabe bzw. Herstellung angestrebten Beladung des (insbesondere granulatförmigen) Werkstoffs die Beladung abgebrochen und anschließend der Werkstoff so gelagert, dass über einen längeren Zeitraum die erreichte Beladung konstant bleibt. Konstant bedeutet hierbei insbesondere im Rahmen der vorliegende Erfindung, dass die Beladung in engen Grenzen unverändert bleibt, d.h., über den genannten Zeitraum weniger als 20%, insbesondere weniger als 15%, insbesondere weniger als 10%, insbesondere weniger als 5%, insbesondere weniger als 1% variiert.

Hierzu wird bevorzugt der Werkstoff nach dem Beladen bei einem niedrigeren zweiten Druck gespeichert, der einem Gleichgewichtsdruck entspricht, bei dem die Beladung, wie oben dargelegt, im Wesentlichen konstant bleibt. Bei dem zweiten Druck kann es sich gemäß einiger Ausführungsformen der Erfindung auch um den Atmosphärendruck bzw. Normaldruck handeln. Entsprechend tritt dann bei der Verarbeitung kein Druckabfall des Werkstoffs auf.

Gemäß einer Ausführungsform des erfindungsgemäßen Verfahrens ist vorgesehen, dass der mit dem Treibmittel beladene Werkstoff aus dem Behälter, in dem der zweite Druck herrscht, entnommen und bei Umgebungsdruck in die Vorrichtung zur Herstellung des Bauteils, insbesondere Spritzgießvorrichtung, gegeben wird, und dort erwärmt und geformt wird. In der vergleichsweise kurzen Zeit, in der sich der beladene Werkstoff in drucklosem Zustand befindet, entweicht nur eine unerhebliche Menge des Treibmittels aus dem beladenen Werkstoff. Erst nach dem Erwärmen bzw. Plastifizieren und z.B. bei und/oder nach dem Einspritzen in die Spritzgussform entstehen aufgrund des Druckabfalls bei der hohen Temperatur des Werkstoffs die besagte Gasblasen.

Alternativ dazu kann der verwendete Behälter so ausgebildet werden, dass er druckdicht z.B. mit der Vorrichtung zur Herstellung des Bauteils, insbesondere Spritzgießvorrichtung, verbindbar ist, so dass der beladene Werkstoff ohne Druckabfall bei konstantem zweiten Druck aus dem Behälter in die Vorrichtung bzw. Spritzgießvorrichtung einleitbar ist, z.B. über einen Einfüllbereich bzw. einen Einfülltrichter der Spritzgießvorrichtung in eine Plasitifizierzone der Spritzgießvorrichtung.

Gemäß einer Ausführungsform des erfindungsgemäßen Verfahrens ist vorgesehen, dass bei dem Verfahren zumindest zwei Behälter verwendet werden, von denen wechselweise einer zur Beladung von Werkstoffen mit Treibmittel verwendet wird (hierbei herrscht der erste Druck in dem Behälter), während der andere Behälter zur Speicherung von mit dem Treibmittel beladenen Werkstoff verwendet wird (hierbei herrscht der zweite Druck in dem Behälter). Der mit Treibmittel beladene Werkstoff, der letztlich z.B. in die Vorrichtung zur Herstellung des Bauteils bzw. Spritzgießvorrichtung abgegeben wird, wird dabei bevorzugt jeweils aus dem Behälter genommen, in dem gerade der beladene Werkstoff bei dem zweiten Druck gespeichert wird.

Gemäß einer weiteren Ausführungsform des erfindungsgemäßen Verfahrens ist vorgesehen, dass zumindest ein Behälter verwendet wird, wobei der Werkstoff in dem mindestens einen Behälter mit dem Treibmittel beladen wird, wobei der erste Druck in dem Druckmittelbehälter herrscht, und wobei sodann der Druck in dem mindestens einen Behälter auf den zweiten Druck abgesenkt wird und hiernach der Werkstoff aus dem mindestens einen Behälter in die Vorrichtung zur Herstellung des Bauteils, z.B. in die Spritzgießvorrichtung, gegeben wird.

Gemäß einer Ausführungsform der Erfindung kann - unabhängig von der Anzahl der Behälter - der mit Treibmittel beladene Werkstoff zusammen mit nicht beladenem Werkstoff in die Vorrichtung zur Herstellung des Bauteils (z.B. Spritzguss- oder Spritzprägevorrichtung oder Presse) gegeben werden, um letztendlich die gewünschte Treibmittelbeladung des Werkstoffs einzustellen.

Gemäß einer weiteren Ausführungsform der Erfindung ist vorgesehen, dass der Werkstoff beim Beladen mit dem Treibmittel gekühlt wird, so dass der zweite Druck zur Aufrechterhaltung der Beladung niedriger ausfallen kann.

Hierbei wird bevorzugt das Treibmittel selbst als Kühlmittel verwendet, indem dieses beim Beladen zumindest teilweise flüssig vorliegt und beim Beladen zum Bereitstellen von Kälte verdampft wird.

Gemäß einer weiteren Ausführungsform der Erfindung ist vorgesehen, dass der mit dem Treibmittel beladene Werkstoff auf mehrere Vorrichtungen zur Herstellung des jeweiligen Bauteils, z.B. Spritzgießvorrichtungen, verteilt wird wobei das Treibmittel eine Vielzahl an Gasblasen ausbildet, so dass das jeweilige ausgehärtete Bauteil eine Zellstruktur aufweist.

Gemäß einer weiteren bevorzugten Ausführungsform der Erfindung ist vorgesehen, dass der mit dem Treibmittel beladene Werkstoff vor dem Einführen in die Vorrichtung oder in die mehreren Vorrichtungen mit einem nicht mit dem Treibmittel beladenen Werkstoff gemischt wird und der daraus resultierende Werkstoff in der Vorrichtung zu dem die Zellstruktur aufweisenden Bauteil geformt wird oder in den mehreren Vorrichtungen zu je einem eine Zellstruktur aufweisenden Bauteil geformt wird.

Mit anderen Worten kann also ein sogenannter Masterbatch bereitgestellt werden, bei dem der Werkstoff z.B. eine mit dem Treibmittel hochaufgeladene Substanz darstellt, die in fester oder flüssiger Form dem unbehandelten Werkstoff (z.B. Kunststoffgranulat) zugegeben werden kann. Z.B. beim Spritzgießen vor dem Einfülltrichter oder im Einfülltrichter der Spritzgießvorrichtung.

Um die Ausbildung der Zellstruktur bei den unterschiedlichen Werkstoffen zusätzlich beeinflussen zu können, ist gemäß einer weiteren Ausführungsform der Erfindung vorgesehen, dem Werkstoff einen oder mehrere Zusatzstoffe in z.B. fester oder flüssiger Form zuzugeben, die die Schäumeigenschaften des Werkstoffs verändern. Dies kann insbesondere bei Werkstoffen wie z.B. HDPE (Hart-Polyethylen) angewendet werden.

Gemäß einer weiteren Ausführungsform der Erfindung ist vorgesehen, dass der Werkstoff vor dem Beladen mit dem Treibmittel in dem Behälter, in dem das Beladen mit dem Treibmittel vorgenommen wird, getrocknet wird. Dies bietet sich insbesondere bei Werkstoffen an, die z.B. ein hydrophiles Polymer aufweisen.

Ein weiterer Vorteil oder zusätzlicher Einsatzfall kann die Verdrängung von Sauerstoff aus dem Werkstoff bzw. Granulat sein. Dadurch können oxidationsbedingte Qualitätsmängel eliminiert oder zumindest reduziert werden.

Gemäß einer besonders bevorzugten Ausführungsform der Erfindung wird das Bauteil mit der Vorrichtung zur Herstellung des Bauteils spritzgegossen. Die besagte Vorrichtung ist dabei also als eine Spritzgießvorrichtung ausgebildet.

Gemäß einer weiteren Ausführungsform der Erfindung wird das Bauteil mit der Vorrichtung zur Herstellung des Bauteils spritzgeprägt. Hierbei wird insbesondere - gegenüber dem Spritzgießen - die Werkstoffschmelze in das bevorzugt drucklose nicht völlig geschlossene Werkzeug eingespritzt, das dann während des Erstarrungsvorganges vollständig geschlossen wird, wobei der entsprechende Schließdruck die endgültige Ausformung des Bauteils bewirkt.

Gemäß einer weiteren bevorzugten Ausführungsform der Erfindung wird das Bauteil mit der Vorrichtung zur Herstellung des Bauteils formgepresst. Die besagte Vorrichtung ist dabei also als eine entsprechende Pressvorrichtung ausgebildet. Beim Formpressen wird bevorzugt der Werkstoff in eine Kavität eingebracht, welche aufgeheizt wird. Anschließend wird die Kavität geschlossen. Durch den hierbei erzeugten Druck erlangt der Werkstoff die vom Werkzeug bzw. der Kavität vorgegebene Form. Nach dem Abkühlen kann das Bauteil aus der Kavität bzw. dem Formwerkzeug entnommen werden. Beim Formpressen können insbesondere die oben beschriebenen plattenförmigen oder bahnenförmigen Werkstoffe verwendet werden, wobei diese ebenfalls bevorzugt bei einem ersten Druck mit dem Treibmittel beladen bzw. imprägniert werden und bei einem niedrigeren zweiten Druck gelagert werden, um die Beladung aufrecht zu erhalten (siehe oben).

Gemäß einer weiteren bevorzugten Ausführungsform der Erfindung wird das Bauteil mit der Vorrichtung zur Herstellung des Bauteils blasgeformt. Zum Blasformen wird ein sogenannter Vorformling verwendet, welcher z.B. in einem vorhergehenden Verfahrensschritt durch z.B. Spritzgießen hergestellt werden kann. Beim Blasformen wird dieser Vorformling aufgeheizt. Nach dem Erwärmen wird der Vorformling in einem Werkzeug durch Einleiten eines Gases aufgeblasen und ein Bauteil in Form eines Hohlkörpers erzeugt.

Gemäß einer weiteren bevorzugten Ausführungsform der Erfindung wird das Bauteil mit der Vorrichtung zur Herstellung des Bauteils extrudiert. Hierbei wird der Werkstoff unter Druck kontinuierlich aus einer formgebenden Öffnung der Vorrichtung herausgepresst. Das dabei entstehende Bauteil weist den Querschnitt der Öffnung auf und kann insbesondere in beliebiger Länge hergestellt werden.

Weiterhin betrifft die Erfindung eine Einrichtung zum Herstellen eines Bauteils mit den Merkmalen des Anspruchs 17, wobei jene Einrichtung insbesondere zum Spritzgießen, Spritzprägen, Formpressen, Blasformen oder Extrudieren des Bauteils konfiguriert ist. Insbesondere dient die besagte Einrichtung zur Durchführung des erfindungsgemäßen Verfahrens.

Danach weist die Einrichtung auf:
- eine Treibmittelquelle zum Bereitstellen eines Treibmittels,
- zumindest einen ersten Behälter zum Aufnehmen eines Werkstoffs, der mit der Treibmittelquelle in Strömungsverbindung bringbar ist, so dass im ersten Behälter befindlicher Werkstoff bei einem ersten Druck mit Treibmittel beladbar ist und bei einem (insbesondere niedrigeren) zweiten Druck dort speicherbar ist,
- eine Vorrichtung zur Herstellung des Bauteils (insbesondere eine Spritzgieß-, Spritzpräge-, Blasform-, Formpress-, oder Extrusionsvorrichtung), die vorzugsweise so mit dem mindestens einen ersten Behälter verbindbar ist, dass der bei dem zweiten Druck gespeicherte Werkstoff in die Vorrichtung führbar ist (z.B. drucklos oder bei dem zweiten Druck), wobei der Werkstoff in der Vorrichtung erwärmbar und formbar ist, derart, dass das Treibmittel eine Vielzahl an Gasblasen ausbildet und das ausgehärtete Bauteil eine Zellstruktur, insbesondere mikrozelluläre Struktur, aufweist.

Gemäß einer Ausführungsform der Einrichtung weist der erste Behälter einen ersten Einlass auf sowie ein erstes Einlassventil zum Absperren bzw. Öffnen des ersten Einlasses. Der erste Einlass ist zum Einleiten von Werkstoff (z.B. in Granulatform) in den ersten Behälter konfiguriert.

Weiterhin weist der erste Behälter gemäß einer Ausführungsform der Erfindung einen zweiten Einlass auf sowie ein zweites Einlassventil zum Absperren bzw. Öffnen des zweiten Einlasses. Hierbei ist der zweite Einlass zum Einleiten von Treibmittel in den ersten Behälter konfiguriert und kann daher in Strömungsverbindung mit der Treibmittelquelle gebracht werden, so dass im ersten Behälter der besagte erste Druck einstellbar ist.

Weiterhin weist der erste Behälter einen ersten Auslass auf sowie ein erstes Auslassventil zum Absperren bzw. Öffnen des ersten Auslasses. Der erste Auslass ist zum Ablassen von Werkstoff (z.B. in Granulatform) in die besagte Vorrichtung zur Herstellung des Bauteils konfiguriert, wobei der erste Auslass über das erste Auslassventil sowie über eine Dosiereinheit (z.B. in Form einer Zellradschleuse) mit der besagten Vorrichtung zur Herstellung des Bauteils verbindbar ist, so dass mit Treibmittel beladener Werkstoff in die Vorrichtung einleitbar ist, z.B. in eine Plastifizierzone einer Spritzgießvorrichtung.

Für den Fall, dass die Vorrichtung zur Herstellung des Bauteils eine Spritzgießvorrichtung ist, ist diese dazu ausgebildet, den mit Treibmittel beladenen Werkstoff in der Plastifizierzone bzw. -einheit zu plastifizieren bzw. zu schmelzen und insbesondere mittels einer Schnecke in eine Spritzgussform zu drücken.

Die Spritzgießvorrichtung weist insbesondere einen Einfüllbereich oder -trichter auf, über den der beladene Werkstoff in die Plastifiziereinheit oder -zone einfüllbar ist.

Weiterhin weist der erste Behälter gemäß einer Ausführungsform der Einrichtung einen zweiten Auslass auf sowie ein zweites Auslassventil zum Absperren bzw. Öffnen des zweiten Auslasses, wobei der zweite Auslass zum Ablassen von Treibmittel aus dem ersten Behälter konfiguriert ist, z. B. um den Druck im ersten Behälter vom ersten Druck auf den zweiten Druck abzusenken.

Gemäß einer Ausführungsform der Einrichtung weist die Einrichtung einen zweiten Behälter zur Aufnahme von Werkstoff auf.

Die Verwendung von zwei Behältern ermöglicht prinzipiell eine kontinuierliche Verfahrensführung, bei der in dem einen Behälter Werkstoff mit dem Treibmittel beladen wird, wobei in diesem Behälter der höhere erste Druck herrscht, während in dem anderen Behälter bereits zuvor in diesem anderen Behälter beladender Werkstoff bei dem zweiten Druck vorgehalten wird und z.B. in die Spritzgießvorrichtung gegeben wird.

Gemäß einer Ausführungsform der Einrichtung weist der zweite Behälter einen ersten Einlass auf sowie ein erstes Einlassventil zum Absperren bzw. Öffnen des ersten Einlasses des zweiten Behälters. Der erste Einlass des zweiten Behälters ist zum Einleiten von Werkstoff (z.B. in Granulatform) in den zweiten Behälter konfiguriert.

Weiterhin weist der zweite Behälter gemäß einer Ausführungsform der Erfindung einen zweiten Einlass auf sowie ein zweites Einlassventil zum Absperren bzw. Öffnen des zweiten Einlasses des zweiten Behälters. Hierbei ist der zweite Einlass des zweiten Behälters zum Einleiten von Treibmittel in den zweiten Behälter konfiguriert und kann daher in Strömungsverbindung mit der Treibmittelquelle gebracht werden, so dass im zweiten Behälter der besagte erste Druck einstellbar ist.

Weiterhin weist der zweite Behälter einen ersten Auslass auf sowie ein erstes Auslassventil zum Absperren bzw. Öffnen des ersten Auslasses des zweiten Behälters. Der erste Auslass des zweiten Behälters ist zum Ablassen von Werkstoff (z. B. in Granulatform) in die Vorrichtung zur Herstellung des Bauteils, insbesondere Spritzgießvorrichtung, konfiguriert, wobei der erste Auslass des zweiten Behälters über das erste Auslassventil sowie über eine zweite Dosiereinheit (z.B. in Form einer Zellradschleuse) mit der besagten Vorrichtung bzw. Spritzgießvorrichtung verbindbar ist, so dass mit Treibmittel beladener Werkstoff in die besagte Vorrichtung, z.B. Plastifizierzone der Spritzgießvorrichtung, einleitbar ist.

Weiterhin weist der zweite Behälter gemäß einer Ausführungsform der Einrichtung einen zweiten Auslass auf sowie ein zweites Auslassventil zum Absperren bzw. Öffnen des zweiten Auslasses des zweiten Behälters, wobei der zweite Auslass des zweiten Behälters zum Ablassen von Treibmittel aus dem zweiten Behälter konfiguriert ist, z.B. um den Druck im zweiten Behälter vom ersten Druck auf den zweiten Druck abzusenken.

Gemäß einer Ausführungsform der Einrichtung weist die Einrichtung eine Strömungsverbindung zwischen dem ersten und dem zweiten Behälter auf, die mittels eines Ventils absperrbar bzw. öffenbar ist, so dass Treibmittel aus dem ersten Behälter in den zweiten Behälter ablassbar ist (und anders herum).

In einer spezielle Ausführungsform ist eine Verbindung zwischen dem ersten Behälter und der Vorrichtung zur Herstellung des Bauteils, insbesondere eine Plastifiziereinheit bzw. eine Spritzgießvorrichtung, oder zwischen dem zweiten Behälter und jener Vorrichtung (bzw. der Plastifiziereinheit oder der Spritzgießvorrichtung) so beschaffen, dass der zweite Druck des Werkstoffs beim Einfüllen in die Vorrichtung bzw. Plastifiziereinheit gehalten werden kann, wobei ein Druckabfall unter den zweiten Druck, insbesondere auf Normaldruck, dann erst in der Vorrichtung bzw. beim Einspritzen des Werkstoffs in die Spritzgussform auftritt, so dass das Treibmittel in der Spritzgussform Gasblasen bildet, die die zelluläre bzw. mikrozelluläre Struktur des ausgehärteten Bauteils erzeugen.

Gemäß einer weiteren Ausführungsform ist eine weitere Zuführeinrichtung vorhanden, die dazu konfiguriert ist, nicht mit Treibmittel beladenen Werkstoff in die Vorrichtung zur Herstellung (z.B. Spritzgießvorrichtung) zu geben, so dass mit Treibmittel beladener Werkstoff aus dem mindestens einen Behälter mit dem nicht-beladenen Werkstoff mischbar ist und somit die Beladung des Werkstoffs mit dem Treibmittel einstellbar ist.

In weiteren Ausführungsformen kann die Vorrichtung zur Herstellung des Bauteils als eine der folgenden Vorrichtungen (siehe auch oben) ausgebildet sein: eine Spritzgießvorrichtung, eine Spritzprägevorrichtung, eine Blasformvorrichtung, eine Formpressvorrichtung, eine Extrusionsvorrichtung.

Weitere Merkmale und Vorteile der vorliegenden Erfindung sollen bei der Beschreibung von Ausführungsbeispielen anhand der Figuren erläutert werden. Es zeigen:
- Fig. 1: eine grafische Darstellung der Beladung zweier Werkstoffe bzw. Kunststoffe mit einem Treibmittel sowie deren Lagerung bei einem niedrigeren Druck;
- Fig. 2: eine schematische Darstellung einer Ausführungsform eines erfindungsgemäßen Verfahrens bzw. einer erfindungsgemäßen Einrichtung zum Herstellen, insbesondere Spritzgießen, eines Bauteils;
- Fig. 3: eine schematische Darstellung einer weiteren Ausführungsform eines erfindungsgemäßen Verfahrens bzw. einer erfindungsgemäßen Einrichtung zum Herstellen, insbesondere Spritzgießen, eines Bauteils; und
- Fig. 4: eine schematische Darstellung einer weiteren Ausführungsform der Erfindung, wobei ein platten- oder bahnenförmiger Werkstoff mit einem Treibmittel imprägniert wird und anschließend formgepresst wird.

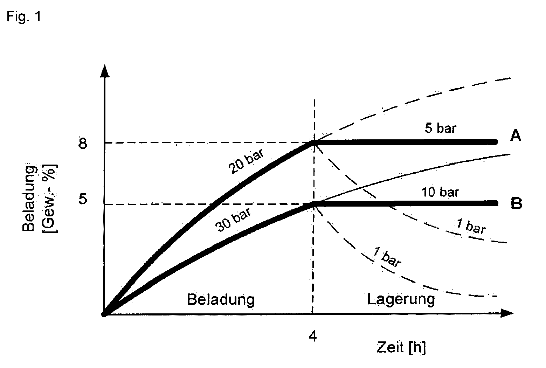

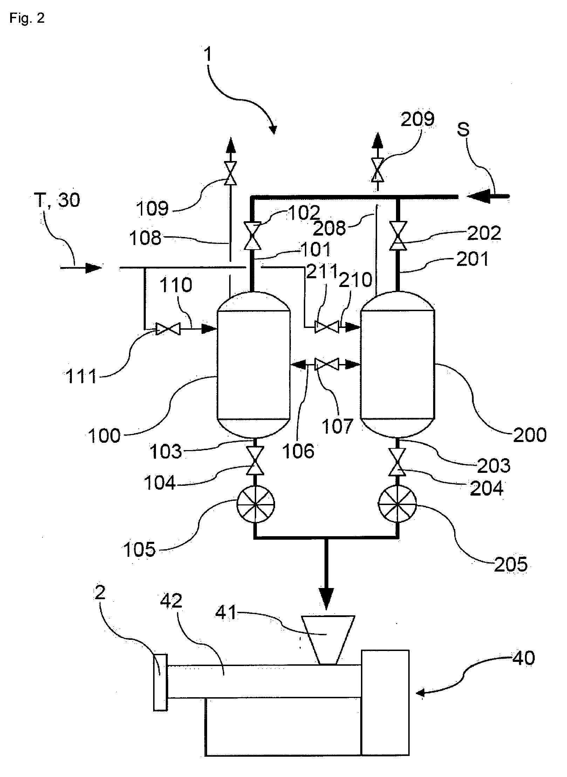

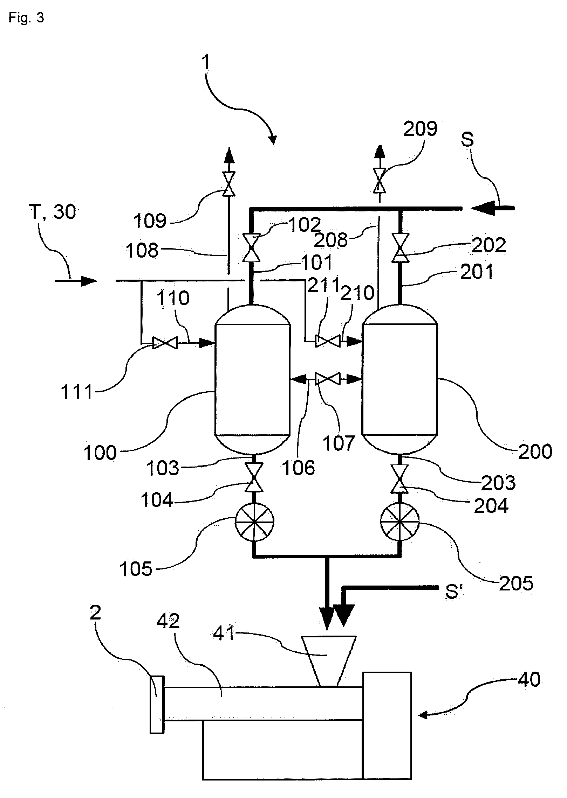

Figur 1 zeigt schematisch zwei Varianten einer erfindungsgemäßen Beladung eines granulatförmigen Werkstoffs (siehe oben) S, bei dem der Werkstoff S, hier exemplarisch ein Polymer A (z.B. Polycarbonat), mit einem Treibmittel, hier CO₂, bei einem ersten Druck in Höhe von 20 bar sowie bei Umgebungstemperatur in einem Behälter imprägniert wird, wobei das Treibmittel zumindest teilweise in den Werkstoff A diffundiert. Nach Erreichen des Zielwerts (hier nach Ablauf einer Zeitspanne von 4h) wird der Druck in dem Behälter auf einen zweiten Druck abgesenkt (hier z.B. 5 bar), der einem Gleichgewichtszustand entspricht, bei dem also die Beladung weder nennenswert zu- noch abnimmt. Dieser Zustand ist abhängig von der relativen Beladung sowie dem Polymer A. Beispielsweise stellt sich bei Polycarbonat ein Gleichgewichtszustand bei etwa 4 bar bis 6 bar, bei Polyethylen bei 5 bar bis 10 bar ein. Der Werkstoff A bzw. Granulat A kann in diesem Gleichgewichtszustand beliebig lange gelagert werden und kann nach Bedarf über eine Dosiereinheit 105, 205 (vgl. Figuren 2 und 3) in eine Vorrichtung 40 zur Herstellung eines Bauteils gegeben werden, bei der es sich z.B. um eine Spritzgießvorrichtung 40 handelt, in der der Werkstoff sofort in einer Plastifiziereinheit 42 unter hohem Druck erhitzt und plastifiziert wird, wobei das Treibmittel T weiterhin in dem Polymer A gelöst bleibt. Erst nach

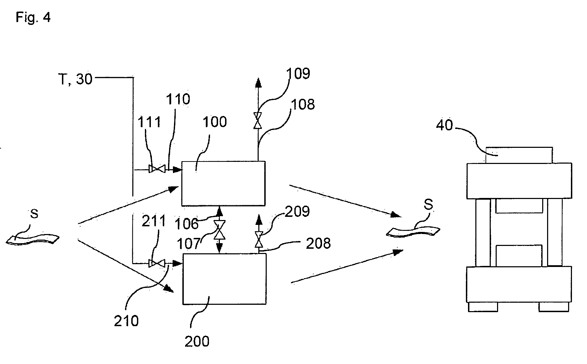

Einspritzen in eine Spritzgussform 2 und dem damit einhergehenden Druckabfall bilden sich Gasblasen des Treibmittels T, die nach dem Aushärten erhalten bleiben und dem Kunststoffbauteil eine zelluläre, insbesondere mikrozelluläre, Struktur verleihen. Der beladenen Werkstoff A kann natürlich auch auf andere Weise verarbeitet werden um ein Bauteil mit zellulärer, insbesondere mikrozellulärer, Struktur zu erhalten. Entsprechend kann es sich bei der Vorrichtung 40 alternativ z.B. um eine Vorrichtung zum Spritzprägen oder Blasformen handeln. Weiterhin kann die Vorrichtung zur Extrusion des Werkstoffs A ausgebildet sein. Ebenfalls kann der Werkstoff A z.B. durch Formpressen (siehe unten Fig. 4) hergestellt werden.

Figur 1 zeigt als weiteres Beispiel ein Polymer bzw. Werkstoff B, das bei einem ersten Druck in Höhe von 30 bar über 4 Stunden mit dem Treibmittel T (hier CO₂) beaufschlagt wird und sodann bei einem zweiten Druck in Höhe von 10 bar gespeichert wird.

Für einen kontinuierlichen Betrieb, insbesondere Spritzgussbetrieb, bietet es sich an, gemäß den Figuren 2 und 3 mit mindestens zwei Behältern 100, 200 zu arbeiten, von denen wechselweise einer zur Beladung und der andere zur Werkstofflagerung und - entnahme einsetzt wird. Der Betrieb mit einem Behälter 100 oder 200 ist ebenfalls möglich, wenn dieser genug Werkstoff bzw. Granulat S z.B. für einen Ein-Schicht-Betrieb bereitstellen kann. Bei den Behältern 100, 200 kann es sich in allen Ausführungsformen um Autoklaven handeln.

Erfindungsgemäß kann das gesamte für den Spritzguss bzw. die Herstellujng des Bauteils verwendete Kunststoffgranulat bzw. Werkstoff S auf die oben beschriebene Weise mit Treibmittel T beladen werden. Es bietet sich aber auch an, nur eine Teilmenge des Werkstoffs S bzw. Granulats im Sinne eines Masterbatch sehr hoch mit Treibmittel T zu beladen und dann zusammen mit unbehandeltem Werkstoff bzw. Granulat S' in eine Vorrichtung zur Herstellung des Bauteils bzw. in einen Einfülltrichter 41 der Spritzgussmaschine 40 zu geben, über den der Werkstoff S, S' in die Plastifiziereinheit 42 und letztlich in die Spritzgussform 2 gelangt. Dies hat den Vorteil, dass die für die Imprägnierung verwendeten Apparate wesentlich kleiner und kostengünstiger ausgeführt werden können. Andererseits kann für den Masterbatch ein Polymer bzw. ein Werkstoff S verwendet werden, das eine erhöhte Aufnahmefähigkeit für das verwendete Treibmittel T aufweist, den Gleichgewichtszustand bei einem geringeren Druck erreicht oder sich schneller beladen lässt.

Eine Einrichtung 1 für einen Dauerbetrieb ist in den Figuren 2 und 3 gezeigt. Gemäß Figur 2 weist die Einrichtung 1 eine Treibmittelquelle 30 zum Bereitstellen eines Treibmittels T auf sowie einen ersten und einen zweiten Behälter 100, 200 zum Aufnehmen und Beladen eines Werkstoffs S mit dem Treibmittel T (hier z.B. CO₂), wobei die beiden Behälter 100, 200 mit der Treibmittelquelle 30 in Strömungsverbindung bringbar sind, so dass jeweils im fraglichen Behälter 100, 200 befindlicher Werkstoff S bei einem ersten Druck mit Treibmittel T beladbar ist und bei einem (insbesondere niedrigeren) zweiten Druck dort speicherbar ist.

Die Einrichtung 1 weist weiterhin eine Vorrichtung 40 zum Herstellen eines Bauteils, insbesondere in Form einer Spritzgießvorrichtung 40, auf, die mit den beiden Behältern 100, 200 verbindbar ist, so dass Werkstoff S bei dem (vorzugsweise konstanten) zweiten Druck aus dem jeweiligen Behälter 100, 200 in die Vorrichtung 40 bzw. Spritzgießvorrichtung 40 einleitbar und dort bei dem zweiten Druck erhitzbar und plastifizierbar bzw. zu einem Bauteil formbar ist.

Schließlich weist die Einrichtung 1 eine Kavität bzw. Spritzgussform 2 auf, die mit der Vorrichtung 40 bzw. Spritzgießvorrichtung 40 verbindbar ist, so dass plastifizierter Werkstoff S in die Kavität bzw. Spritzgussform 2 unter Druckabfall einbring- bzw. einspritzbar ist, so dass das Treibmittel T in der Kavität bzw. Spritzgussform 2 eine Vielzahl an Gasblasen ausbildet, derart, dass das ausgehärtete Bauteil eine Zellstruktur, insbesondere mikrozelluläre Struktur, aufweist.

Im Einzelnen weist der erste Behälter 100 einen ersten Einlass 101 auf sowie ein erstes Einlassventil 102, das zum Absperren bzw. Öffnen des ersten Einlasses 101 dient. Der erste Einlass 101 ist zum Einleiten des Werkstoffs S in den ersten Behälter 100 konfiguriert.

Weiterhin weist der erste Behälter 100 einen zweiten Einlass 110 auf sowie ein zweites Einlassventil 111, das zum Absperren bzw. Öffnen des zweiten Einlasses 110 dient. Hierbei dient der zweite Einlass 110 zum Einleiten von Treibmittel T aus der Treibmittelquelle 30 in den ersten Behälter 100, so dass im ersten Behälter 100 der besagte erste Druck einstellbar ist.

Weiterhin weist der erste Behälter 100 einen ersten Auslass 103 auf sowie ein erstes Auslassventil 104, das zum Absperren bzw. Öffnen des ersten Auslasses 103 dient. Der erste Auslass 103 ist dabei zum Ablassen von Werkstoff S (z.B. in Granulatform) in die Vorrichtung 40 bzw. Spritzgießvorrichtung 40 vorgesehen, wobei der erste Auslass 103 über das erste Auslassventil 104 sowie über eine erste Dosiereinheit (z.B. in Form einer Zellradschleuse) 105 mit der Vorrichtung bzw. Spritzgießvorrichtung 40 verbindbar ist, so dass mit Treibmittel T beladener Werkstoff S in die Vorrichtung 40 bzw. in die Plasitifiziereinheit 42 der Spritzgießvorrichtung 40 einleitbar ist.

Weiterhin weist der erste Behälter 100 der Einrichtung 1 einen zweiten Auslass 108 auf sowie ein zweites Auslassventil 109, das zum Absperren bzw. Öffnen des zweiten Auslasses 108 dient, wobei der zweite Auslass 108 zum Ablassen von Treibmittel T aus dem ersten Behälter 100 konfiguriert ist, um den Druck im ersten Behälter 100 vom ersten Druck auf den zweiten Druck absenken zu können.

Weiterhin weist die Einrichtung 1 einen zweiten Behälter 200 zum Beladen und Speichern des Werkstoffs S auf.

Die Verwendung von zwei Behältern 100, 200 ermöglicht prinzipiell die oben bereits erwähnte kontinuierliche Verfahrensführung, bei der in dem einen Behälter 100 Werkstoff S mit dem Treibmittel T beladen wird, wobei in diesem Behälter 100 der höhere erste Druck herrscht, während in dem anderen Behälter 200 bereits zuvor in diesem anderen Behälter 200 beladener Werkstoff S bei dem zweiten Druck vorgehalten wird und in die Vorrichtung 40 bzw. Spritzgießvorrichtung 40 gegeben wird.

Weiterhin weist auch der zweite Behälter 200 einen ersten Einlass 201 auf sowie ein erstes Einlassventil 202, das zum Absperren bzw. Öffnen des ersten Einlasses 201 des zweiten Behälters 200 dient. Der erste Einlass 201 des zweiten Behälters 200 ist wiederum zum Einleiten des Werkstoffs S in den zweiten Behälter 200 konfiguriert. Weiterhin weist auch der zweite Behälter 200 einen zweiten Einlass 210 auf sowie ein zweites Einlassventil 211, das zum Absperren bzw. Öffnen des zweiten Einlasses 210 des zweiten Behälters 200 dient. Hierbei ist der zweite Einlass 210 des zweiten Behälters 200 zum Einleiten von Treibmittel T in den zweiten Behälter 200 konfiguriert, so dass im zweiten Behälter 200 der besagte erste Druck einstellbar ist.

Weiterhin weist ferner der zweite Behälter 200 einen ersten Auslass 203 auf sowie ein erstes Auslassventil 204, das zum Absperren bzw. Öffnen des ersten Auslasses 203 des zweiten Behälters 200 dient. Der erste Auslass 203 des zweiten Behälters 200 ist hierbei zum Ablassen von Werkstoff S in die Vorrichtung 40 bzw. Spritzgießvorrichtung 40 konfiguriert, wobei der erste Auslass 203 des zweiten Behälters 200 über das erstes Auslassventil 204 sowie über eine zweite Dosiereinheit (z.B. in Form einer Zellradschleuse) 205 mit der Vorrichtung 40 bzw. Spritzgießvorrichtung 40 verbindbar ist, so dass mit Treibmittel T beladener Werkstoff S in die Vorrichtung 40 bzw. in die Plasitifiziereinheit 42 der Spritzgießvorrichtung 40 einleitbar ist.

Weiterhin weist auch der zweite Behälter 200 der Einrichtung 1 einen zweiten Auslass 208 auf sowie ein zweites Auslassventil 209 zum Absperren bzw. Öffnen des zweiten Auslasses 208 des zweiten Behälters 200, wobei der zweite Auslass 208 des zweiten Behälters 200 zum Ablassen von Treibmittel T aus dem zweiten Behälter 200 konfiguriert ist, so dass der Druck im zweiten Behälter 200 vom ersten Druck auf den zweiten Druck absenkbar ist.

Gemäß einer Ausführungsform der Einrichtung 1 kann die Einrichtung 1, wie in der Figur 2 gezeigt, eine Strömungsverbindung 106 zwischen dem ersten und dem zweiten Behälter 100, 200 aufweisen, die mittels eines Ventils 107 absperrbar bzw. öffenbar ist, so dass Treibmittel T zwischen den Behältern 100, 200 hin- und her transferiert werden kann.

Bei einer Ausführungsform des erfindungsgemäßen Verfahrens, das eine oben beschriebene Einrichtung 1 verwendet, wird nun Werkstoff S (z.B. Kunststoffgranulat) in einem ersten Schritt in den ersten Behälter 100 eingefüllt, der anschließend mittels der Ventile 102 und 104 gasdicht verschlossen wird. Über das Ventil 111 wird gasförmiges Treibmittel T in den Behälter 100 bis zum Erreichen des gewünschten ersten Drucks eingeleitet.

Der erste Druck wird für eine vordefinierte Zeit aufrechterhalten. Anschließend wird der erste Druck über das Ventil 109 bis zum Erreichen des zweiten Drucks bzw. des Gleichgewichtsdrucks abgebaut. Alternativ kann der Druck über das Ventil 107 teilweise in den wechselseitig betriebenen zweiten Behälter 200 abgebaut werden, um Gas-Verluste zu reduzieren.

Zur Entnahme wird der imprägnierte Werkstoff bzw. Granulat S über das geöffnete Ventil 104 und eine Dosiereinheit 105 (z.B. eine Zellradschleuse) der Vorrichtung 40 bzw. dem Einfülltrichter 41 der Spritzgussmaschine 40 zugeführt.

Die Einrichtung 1 gemäß Fig. 3 für die Bereitstellung des oben beschriebenen Masterbatch ist im Wesentlichen baugleich mit der Einrichtung gemäß Fig. 2, mit dem Unterschied, dass ein Hauptstrom an unbehandeltem Werkstoff S' direkt in den Einfülltrichter 41 eingegeben wird. Ein Teilstrom an Werkstoff S wird nach dem oben beschriebenen Verfahren imprägniert und der imprägnierte Werkstoff bzw. Granulat S ebenfalls in die Vorrichtung 40 bzw. in den Einfülltrichter 41 eingespeist. Die Materialien S und S' können dabei unterschiedlich sein.

Die beschriebene Vorrichtung zur Beladung eines Werkstoffs mit einem Treibmittel stellt eine autark arbeitende Einheit dar, die einer Vorrichtung 40, insbesondere Spritzgießvorrichtung 40, vorgeschaltet werden kann und die problemlos von einer Vorrichtung 40 bzw. Spritzgießvorrichtung 40 auf eine andere verlegt werden kann.

Es ist kein Eingriff in die bestehende Vorrichtung 40 bzw. Spritzgießvorrichtung 40 notwendig, d.h., es muss keine Zusatzvorrichtung (etwa zusätzlich eine längere und speziell ausgeführte Sonderschnecke zum Einspeisen von Treibmittel) installiert werden, die damit zu einem festen Bestandteil der Vorrichtung, insbesondere Spritzgießvorrichtung, wird bzw. die vorhandene Einrichtung muss nicht modifiziert werden.

Somit ermöglicht die Erfindung eine einfache Umstellung eines Herstellungsprozesses, insbesondere Spritzgießprozesses, auf derselben Maschine von normalem Werkstoff/Polymer zu geschäumtem Werkstoff/Polymer.

Mittels einer Kühlung der Behälter 100, 200 kann weiterhin die Diffusion des Treibmittels T aus dem Werkstoff/Granulat S heraus reduziert werden, um den Gleichgewichtszustand bei einem geringeren zweiten Druck (im Idealfall bei Umgebungsdruck) zu erreichen. Dies würde den finanziellen Aufwand für Dosiereinheiten (z.B. Zellradschleusen), die mit zunehmendem Druck erheblich teurer werden, deutlich reduzieren. Eine derartige Kühlung kann dadurch erreicht werden, dass die Beladung bei einem Zustand erfolgt, in dem das Treibmittel T bzw. CO₂ teilweise flüssig im betreffenden Behälter 100, 200 vorliegt (z.B. bei 0°C und 35 bar). Durch die Entspannung auf den gewünschten Gleichgewichtsdruck nimmt das sublimierende bzw. verdampfende CO₂ erhebliche Menge an Wärme aus dem Werkstoff bzw. Granulat S auf und kühlt dieses ab. Durch eine geeignete Abstimmung von Beladungsdruck (erster Druck), Behältergröße und Werkstoff- bzw. Granulat-Gewicht können Verhältnisse erzielt werden, bei denen das Treibmittel T bzw. CO₂ vollständig sublimiert bzw. verdampft ist.

Sinnvollerweise sind die Behälter 100, 200 für diesen Zweck isoliert. Alternativ kann die Kühlung bzw. die Kontrolle der Temperatur auch nach der Reduzierung des Drucks durch Einspeisung von flüssigem Kohlendioxid in den betreffenden Behälter 100, 200 erfolgen.

Gemäß einer weiteren Ausgestaltung kann eine zentrale Einrichtung 1 zum Imprägnieren des Werkstoffs S bereitgestellt werden, von der aus mehrere Vorrichtungen 40 zur Herstellung eines Bauteiles bzw. Spritzgussmaschinen 40 versorgt werden. Dies bedeutet, dass nicht jede Vorrichtung 40 bzw. Spritzgussmaschine 40 eine eigene Einrichtung zur Imprägnierung benötigt. Es wird jedoch insbesondere ein System zum Verteilen des Werkstoffs bzw. Granulats S auf die verschiedenen Vorrichtungen bzw. Maschinen 40 vorgesehen. Dies kann analog zu dem Bereitstellen von getrocknetem Werkstoff/Granulat S aus zentralen Trocknern geschehen. Dabei wird vorzugsweise wiederum sichergestellt, dass die Beladung mit dem Treibmittel T zwischen zentraler Imprägnierung und der jeweiligen Vorrichtung bzw. Spritzgießvorrichtung 40 konstant bleibt.

Die Erfindung bezieht sich im Übrigen insbesondere auf die Beladung/Behandlung von Werkstoffen in Form von Thermoplasten sowie Duroplasten.

Fig. 4 zeigt eine weitere Möglichkeit zur Herstellung eines Bauteils aus einem bahnen- oder plattenförmigen Werkstoff S, z.B. in Form eines Faser-Matrix-Halbzeugs (z.B. organo sheet), der mit einem Treibmittel (z.B. CO₂) bei einem ersten Druck (siehe oben) in einem ersten Behälter 100 beladen wird und dann bei einem niedrigeren zweiten Druck (vergl. oben) in einem zweiten Behälter 200 gespeichert wird, um die Beladung aufrecht zu erhalten. Hiernach wird der Werkstoff S in eine Vorrichtung 40 zum Formpressen des Werkstoffs S gegeben, wobei der Werkstoff erwärmt wird und aufgrund eines Druckabfalls in der Vorrichtung bzw. im Werkzeug 40 Gasblasen durch das Treibmittel ausbildet, die dem ausgehärteten Bauteil die besagte zelluläre bzw. mikrozelluläre Struktur verleihen. Der Werkstoff S kann natürlich auch direkt nach dem Beladen 301 in die Vorrichtung 40 gegeben werden, ohne eine weitere Zwischenspeicherung bei dem besagten zweiten Druck.

Im Einzelnen weist der erste Behälter 100 wiederum einen Einlass 110 auf sowie ein Einlassventil 111, das zum Absperren bzw. Öffnen des Einlasses 110 dient. Hierbei dient der Einlass 110 zum Einleiten von Treibmittel T aus einer Treibmittelquelle 30 in den ersten Behälter 100, so dass im ersten Behälter 100 der besagte erste Druck einstellbar ist.

Weiterhin weist der erste Behälter 100 der Einrichtung 1 einen Auslass 108 auf sowie ein Auslassventil 109, das zum Absperren bzw. Öffnen des Auslasses 108 dient, wobei der zweite Auslass 108 zum Ablassen von Treibmittel T aus dem ersten Behälter 100 konfiguriert ist, um den Druck im ersten Behälter 100 vom ersten Druck auf den zweiten Druck absenken zu können.

Weiterhin weist auch der zweite Behälter 200 einen Einlass 210 auf sowie ein Einlassventil 211, das zum Absperren bzw. Öffnen des Einlasses 210 des zweiten Behälters 200 dient. Hierbei ist der Einlass 210 des zweiten Behälters 200 zum Einleiten von Treibmittel T in den zweiten Behälter 200 konfiguriert, so dass im zweiten Behälter 200 der besagte erste Druck einstellbar ist.

Weiterhin weist ferner der zweite Behälter 200 einen Auslass 208 auf sowie ein Auslassventil 209 zum Absperren bzw. Öffnen des Auslasses 208 des zweiten Behälters 200, wobei der Auslass 208 des zweiten Behälters 200 zum Ablassen von Treibmittel T aus dem zweiten Behälter 200 konfiguriert ist, so dass der Druck im zweiten Behälter 200 vom ersten Druck auf den zweiten Druck absenkbar ist.

Schließlich kann eine Strömungsverbindung 106 zwischen dem ersten und dem zweiten Behälter 100, 200 vorgesehen sein, die mittels eines Ventils 107 absperrbar bzw. öffenbar ist, so dass Treibmittel T bei Bedarf zwischen den Behältern 100, 200 hin- und her transferiert werden kann.

**Bezugszeichen**

| | |
|---|---|
| 1 | Einrichtung |
| 2 | Spritzgussform |
| 30 | Treibmittelquelle |
| 40 | Vorrichtung, z.B. Spritzgießvorrichtung |
| 41 | Einfüllbereich oder-trichter |
| 42 | Plastifiziereinheit |
| 100, 301 | Erster Behälter |
| 101, 201 | Erster Einlass |
| 102, 202 | Erstes Einlassventil |
| 103, 203 | Erster Auslass |
| 104, 204 | Erstes Auslassventil |
| 105, 205 | Dosiereinheit |
| 106 | Strömungsverbindung |
| 107 | Ventil |
| 200, 302 | Zweiter Behälter |
| 206 | Ventil |
| 108, 208 | (Zweiter) Auslass |
| 108, 209 | (Zweites) Auslassventil |
| 110, 210 | (Zweiter) Einlass |
| 111, 211 | (Zweites) Einlassventil |
| S, S' | Werkstoff (z.B. Kunststoff) |
| T | Treibmittel (z.B. CO₂) |

## Patentansprüche

1. Verfahren zum Herstellen eines Bauteils, bei dem ein Werkstoff (S) mit einem fluiden Treibmittel (T) bei einem ersten Druck beladen wird und der mit dem Treibmittel (T) beladene Werkstoff (S) in einer Vorrichtung (40) zur Herstellung des Bauteils erwärmt wird und das Bauteil geformt wird, wobei das Treibmittel (T) eine Vielzahl an Gasblasen ausbildet, so dass das ausgehärtete Bauteil eine Zellstruktur aufweist.

2. Verfahren nach Anspruch 1, **dadurch gekennzeichnet, dass** der Werkstoff (S) beim Beladen mit dem Treibmittel (T) als ein Granulat oder plattenförmig vorliegt.

3. Verfahren nach einem der vorhergehenden Ansprüche, **dadurch gekennzeichnet, dass** das Treibmittel (T) als einer der folgenden Stoffe ausgebildet ist oder einen oder mehrere der folgenden Stoff aufweist: CO₂, N₂, Argon.

4. Verfahren nach einem der vorhergehenden Ansprüche, **dadurch gekennzeichnet, dass** das Treibmittel (T) beim Beladen des Werkstoffs (S) in einem flüssigen und/oder gasförmigen Zustand ist, oder dass das Treibmittel (T) beim Beladen in einem überkritischen Zustand ist.

5. Verfahren nach einem der vorhergehenden Ansprüche, **dadurch gekennzeichnet, dass** der Werkstoff (S) beim Beladen mit dem Treibmittel (T) imprägniert wird.

6. Verfahren nach einem der vorhergehenden Ansprüche, **dadurch gekennzeichnet, dass** der Werkstoff (S) nach dem Beladen bei einem niedrigeren zweiten Druck gespeichert wird oder bei einem zweiten Druck, der dem Atmosphärendruck entspricht.

7. Verfahren nach Anspruch 6, **dadurch gekennzeichnet, dass** der zweite Druck so eingestellt wird, dass die Beladung des Werkstoffs (S) mit dem Treibmittel (T) nahezu konstant bleibt.

8. Verfahren nach Anspruch 6 oder 7, **dadurch gekennzeichnet, dass** der mit dem Treibmittel (T) beladene und beim zweiten Druck gespeicherte Werkstoff (S) in die Vorrichtung (40) zur Herstellung des Bauteils gegeben wird, dort erwärmt und geformt wird, derart, dass sich die besagten Gasblasen bilden und das ausgehärtete Bauteil die besagte Zellstruktur aufweist.

9. Verfahren nach einem der Ansprüche 6 bis 8, **dadurch gekennzeichnet, dass** bei dem Verfahren zumindest zwei Behälter (100, 200) verwendet werden, von denen wechselweise einer zur Beladung von Werkstoff (S) mit Treibmittel (T) bei dem ersten Druck verwendet wird, während der andere Behälter (200, 100) zur Speicherung von mit dem Treibmittel (T) beladenem Werkstoff (S) bei dem zweiten Druck verwendet wird, wobei der mit Treibmittel (T) beladene Werkstoff (S), der in die Vorrichtung (40) zur Herstellung des Bauteils gegeben wird, jeweils aus dem Behälter (100, 200) genommen wird, in dem der beladene Werkstoff (S) bei dem zweiten Druck gespeichert wird.

10. Verfahren nach einem der Ansprüche 6 bis 8, **dadurch gekennzeichnet, dass** bei dem Verfahren zumindest ein Behälter (100) verwendet wird, wobei der Werkstoff (S) in dem mindestens einen Behälter (100) bei dem ersten Druck beladen wird und sodann der Druck in dem mindestens einen Behälter (100) auf den zweiten Druck abgesenkt wird und hiernach der beladene Werkstoff (S) aus dem mindestens einen Behälter (100) in die Vorrichtung (40) zur Herstellung des Bauteils gegeben wird.

11. Verfahren nach einem der vorhergehenden Ansprüche, **dadurch gekennzeichnet, dass** der Werkstoff (S) beim Beladen mit dem Treibmittel (T) gekühlt wird.

12. Verfahren nach einem der vorhergehenden Ansprüche, **dadurch gekennzeichnet, dass** der mit dem Treibmittel (T) beladene Werkstoff (S) auf mehrere Vorrichtungen (40) zur Herstellung je eines Bauteils verteilt wird und in der jeweiligen Vorrichtung (40) erwärmt und geformt wird, wobei das Treibmittel (T) eine Vielzahl an Gasblasen ausbildet, so dass das jeweilige ausgehärtete Bauteil eine Zellstruktur aufweist.

13. Verfahren nach einem der vorhergehenden Ansprüche, **dadurch gekennzeichnet, dass** der mit dem Treibmittel (T) beladene Werkstoff vor dem Einführen in die Vorrichtung (40) oder in die mehreren Vorrichtungen (40) mit einem nicht mit dem Treibmittel (T) beladenen Werkstoff gemischt wird und der daraus resultierende Werkstoff in der Vorrichtung (40) zu dem die Zellstruktur aufweisenden Bauteil geformt wird oder in den mehreren Vorrichtungen (40) zu je einem eine Zellstruktur aufweisenden Bauteil geformt wird.

14. Verfahren nach einem der vorhergehenden Ansprüche, **dadurch gekennzeichnet, dass** dem Werkstoff zumindest ein weiterer Zusatzstoff, vorzugsweise in fester oder flüssiger Form, zuzugeben wird, um die Schäumeigenschaften des Werkstoffs zu beeinflussen.

15. Verfahren nach einem der vorhergehenden Ansprüche, **dadurch gekennzeichnet, dass** das Bauteil mittels der Vorrichtung (40) spritzgegossen, spritzgeprägt, formgepresst, blasgeformt oder extrudiert wird.

16. Einrichtung (1) zum Herstellen eines Bauteils, insbesondere zur Durchführung des Verfahrens nach einem der vorhergehenden Ansprüche, mit:
- einer Treibmittelquelle (30) zum Bereitstellen eines Treibmittels (T),
- zumindest einem ersten Behälter (100, 200) zum Aufnehmen eines Werkstoffs (S), der mit der Treibmittelquelle (30) in Strömungsverbindung bringbar ist, so dass im ersten Behälter (100) befindlicher Werkstoff (S) bei einem ersten Druck mit Treibmittel (T) beladbar ist und bei einem zweiten Druck dort speicherbar ist, und
- einer Vorrichtung (40), die so mit dem Behälter (100) verbindbar ist, dass der bei dem zweiten Druck gespeicherte Werkstoff (S) in die Vorrichtung (40) führbar und dort erwärmbar und formbar ist, derart, dass das Treibmittel eine Vielzahl an Gasblasen ausbildet und das ausgehärtete Bauteil eine Zellstruktur aufweist.
